# EUROPEAN PATENT APPLICATION

(11) **EP 3 305 068 A1**
(43) Date of publication of application: **11.04.2018**
(21) Application number: 16382462.6
(22) Date of filing: 10.10.2016
(51) Int. Cl.: A01G 31/04, A01G 1/00, A01G 9/14, A01G 31/06

(54) **METHOD FOR THE PRODUCTION OF SAFFRON FLOWER**

(71) Applicant: Guerrero Munoz, Jose Estanislao, 02005 Albacete (ES)
(72) Inventor: PÈREZ VIDAL, Carlos, E-03202 Elche, Alicante (ES); GUERRERO MUÑOZ, José Estanislao, E-02005 Albacete (ES)
(74) Representative: ABG Patentes, S.L.

(57) **Abstract**

The present invention relates to a method of farming bulbs (4) for the production of saffron flowers (F) combining the use of a cropland (1) for cultivating and growing saffron bulbs (4) and the use of a farming area (2), the latter being established in an open field or preferably in an industrial unit or a greenhouse. The farming area (2) comprises storage and conveyance means for storing and conveying containers (3) for the bulbs (4) that will gradually produce saffron flowers (F). This farming area (2) also has a cutting unit (2.4) through which the containers (3) containing bulbs (4) with flowers (F) to be cut move, subsequently separating the stigmas from the flowers (F) for the automated production of saffron stigmas. The present invention also relates to an automated saffron flower cutting unit (2.4) which allows the parallel cutting of flowers (F) from bulbs (4) distributed in rows and columns in a container (3), increasing the automated production of saffron stigmas.

## Description

### Object of the Invention

A first aspect of the present invention relates to a method of farming bulbs for the production of saffron flowers combining the use of a cropland for cultivating and growing saffron bulbs and the use of a farming area, the latter being established in an open field or preferably in an industrial unit or a greenhouse. The farming area comprises storage and conveyance means for storing and conveying containers for the bulbs that will gradually produce saffron flowers. This farming area also has a cutting unit through which the containers containing bulbs with flowers to be cut move, subsequently separating the stigmas from the flowers for the automated production of saffron stigmas.

A second aspect of the present invention relates to an automated saffron flower cutting unit which allows the parallel cutting of flowers from bulbs distributed in rows and columns in a container, increasing the automated production of saffron stigmas. This cutting unit is characterized by the combination of individual chambers in each cutting module with separation panels and runners which allow the individual observation of a specific flower through a specific chamber with the observation of other aligned flowers in the direction transverse to the forward movement direction of the container.

### Background of the Invention

Saffron cultivation is one of the oldest agricultural activities, the conventional cultivation thereof is readily accessible and not complex, and the product formed by the stigmas of the flower is highly regarded as spice.

This spice has a very high price per kilogram, not so much for its cultivation difficulties but because crop harvesting and classification is carried out manually and the production, measured by weight, is very low. Each flower only provides three stigmas the weight of which is negligible.

The conventional cultivation method is based on plating saffron bulbs in a cropland. From this bulb and depending on the bulb size, one or more flowers stem from said bulb, the flower is manually harvested and then the stigmas are also manually extracted.

The bulbs multiply every year such that 5 bulbs are obtained for each planted bulb after three years.

The extraction and separation of bulbs allows replanting the bulbs for continuously harvesting flowers from which stigmas are then extracted.

The degree of human intervention is very high, making the end product more expensive, and how the flower is cut and the stigmas subsequently produced to obtain quality spice is also important. It is necessary to obtain a stigma without the lower part to have a high saffron aroma and value. This cutting control and handling is also the responsibility of the harvester and the operator separating the stigmas.

Process mechanization for intensive farming only affects the planting of bulbs using tractors and specialized tools for planting, and the cutting of the flower once extracted from the bulb.

In other words, there are machines that manually receive harvested flowers such that any flower already cut from the bulb must be placed on a conveyor belt particularly adapted for saffron flowers and is brought to a system consisting of blades which carry out cutting at a height referring to the conveyor belt on which the flower is located regardless of the flower shape and size. This is the case of German patent DE3407517C1. In this case, the flower is still manually harvested from the bulb, the machine also does not have to be fed in an automated manner and the cutting control is not precise, resulting in a low quality end product.

To improve the final cutting of the flower, publication entitled "Automated cutting system to obtain the stigmas of the saffron flower" by Luis Gracia et al., July 2009, is known in which it describes a method for determining the cutting height in saffron flowers to allow automation. This method uses a chamber collecting the image of the flower conveyed on a conveyance belt and processes it for determining the cutting height. This cutting height is a variable which is sent in the form of signal to blades that are positioned according to said signal for carrying out the cutting at the suitable height.

None of the publications describes a method which allows fully automated saffron stigma production and neither do they describe how to carry out an apparatus capable of increasing the production of cutting saffron flowers directly from the bulb from a plurality of flowers (i.e., automated peeling and harvesting).

The present invention solves the problem herein considered by means of a first aspect of the invention which provides for an automated bulb farming, cutting the flowers growing from these bulbs and harvesting the stigmas. Another object of the invention relates to a machine which is capable of obtaining precise cuts in a plurality of flowers still on the bulb such that the cutting of each flower is adapted to the height to which it has grown without the operation thereof being disrupted by the presence of the rest of the flowers in one and the same container.

### Description of the Invention

According to a first aspect of the invention, the production of saffron stigmas is automated by means of an efficient farming of bulbs so that they can grow, the production of one or more flowers in each of the bulbs, the automated production of stigmas from flowers that each bulb will gradually generate and, the production of new bulbs to maintain the productive cycle.

*The method of farming bulbs for the production of saffron flower according to this first inventive aspect comprises the following means:*
- *a cropland for cultivating and growing saffron bulbs,*
- *a farming area in turn comprising:*
   *i. a plurality of containers for the bulb,*
   *ii. a plurality of conveyance and storage line segments for conveying and storing containers for the bulb,*
   *iii. at least one feed conveyance line for feeding the containers for the bulb with selection means configured for introducing the container for the bulb conveyed in a pre-established conveyance and storage line segment,*
   *iv. at least one extraction conveyance line for extracting the containers for the bulb with selection means configured for extracting a container for the bulb from a pre-established conveyance and storage line segment,*
   *v. a cutting unit with an inlet fed by the extraction conveyance line and with an outlet connected with the feed conveyance line.*

The cropland is used for the starting saffron bulbs to grow and acquire a size allowing them to produce the largest possible number of flowers during their flower production phase. This phase allows the mechanization of the field with tractors and implements making plowing, planting and recovering the bulbs when they have grown easier.

According to one embodiment, once the bulbs have grown they are stored in chambers in which the temperature and humidity allow the step-wise flowering thereof once planted.

The farming area is intended for the flower production on the bulbs and contains means which allow cutting the produced flowers in an automated manner for subsequently extracting stigmas from the flowers. In the state of the art, this automated phase is the one requiring intensive labor in the field.

With this objective, the bulbs that are then brought to the farming area are moved into containers having a vital support to allow flower production. According to one embodiment, the vital support of the container is soil in which the bulb is completely and partially buried, allowing the flowers to grow. According to another embodiment, the physical support of the bulb is a holding structure keeping the bulb in contact with water and mineral salts and organic fertilizers to keep the bulb alive by means of hydroponic cultivation. In this case, the vital support is formed by the holding structure for holding the bulb plus means which allow supplying liquid for hydroponic cultivation. These means for the hydroponic cultivation comprise feed pumps, circulation and draining conduits as well as intermediate tanks associated with the container for the bulb so that the hydroponic cultivation is self-sufficient when the container is conveyed.

In any of the cases, the bulb is in a container providing it with vital support to produce flowers throughout its productive cycle until the depletion thereof. This container allows storing and conveying the bulb without having to directly handling it.

Although the farming area can be an uncovered cropland, the preferred example is an industrial unit or a greenhouse inside which one or more environmental variables such as temperature, light or humidity, is under control.

The farming area contains at least a plurality of conveyance and storage line segments in which the containers are kept, producing saffron flowers. The object identified as "conveyance and storage line segments" must be interpreted as segments formed by linear conveyance means capable of moving one or more containers and, also serve as storage means allowing the bulbs to produce flowers in the space inside the container in the segment.

These conveyance and storage line segments are fed from a feed conveyance line capable of providing a container to any of the conveyance and storage line segments. The object identified as "feed conveyance line" must be interpreted as a line with conveyance means which allow transferring one or more containers along the path thereof. According to embodiments, the conveyance line starts its travel in the cutting unit and a final segment adapted for bringing the container to any of the segments of the plurality of conveyance and storage line segments.

According to one embodiment, the automation uses a central processing unit capable of selecting the conveyance and storage segment destined to receive the container circulating through the feed line.

This feed line provides trays with bulbs at the conveyance and storage segments so that they produce flowers during the time they remain in said conveyance and storage segments. It is expected that at the beginning of each of the conveyance and storage segments, the containers will not have flowers or the flowers will be in a first phase of growth, and that larger flowers will be found at the end of these conveyance and storage segments.

At the opposite end of the conveyance and storage segments fed by the feed conveyance line, there is arranged the extraction conveyance line responsible for conveying containers coming from any of the conveyance and storage line segments. The object identified as "extraction conveyance line" must be interpreted as a line with conveyance means which allow transferring one or more containers along the path thereof. According to embodiments, the conveyance line has a segment located at the end of the conveyance and storage line segments and an opposite final end which finishes in the cutting unit.

In one embodiment, the plurality of conveyance and storage line segments have the same length such that when the extraction conveyance line receives a container with bulbs with flowers for cutting, after cutting the flowers, the feed conveyance line brings this very same container to the same conveyance and storage segment it originally comes from in order to assure that all the conveyance and storage segments always have the same amount of containers.

Flowers which have grown the most do not have to be in containers located at the end of the conveyance and storage line segments contiguous to the extraction conveyance line. This is the case of conveyance line segments fed with a container with a bulb already having a small flower that has not been cut previously, or with bulbs with a degree of growth greater than others. In these cases, it is possible to recirculate containers without necessarily cutting any of their flowers using the extraction conveyance line and then the feed conveyance line. The recirculation of containers in one and the same conveyance and storage line segment allows a specific container to move forward until the extraction thereof. Likewise, this forward movement can bring flowers in an advanced growth stage to the beginning of the conveyance and storage segment which can lead to subsequent recirculations.

It is considered important to maintain a high degree of humidity without having to supply liquid water at least in the bulb storage area to cause the flowers to grow without any leaves.

*With respect to these physical means, the method according to this first aspect of the invention comprises the following steps:*
*a) cultivating a plurality of bulbs in the cropland so that they can grow,*
*b) harvesting the cultivated bulbs,*
*c) planting the bulbs in the containers for the bulb, at least one bulb per container, and storing the containers for the bulb with their at least one bulb in the conveyance and storage line segments,*
*d) carrying out the following sub-steps repeatedly until at least a part of the bulbs has been depleted:*
   - *extracting a container for the bulb with at least one bulb with the growing sa ffron flower from its conveyance and storage line segment, moving it to the extraction conveyance line which in turn conducts it to the cutting unit,*
   - *cutting and removing the at least one saffron flower by means of the cutting unit,*
   - *returning the container for the bulb, moving it from the feed conveyance line to a conveyance and storage line segment,*
*e) extracting the bulbs depleted from the containers for the bulb and planting the new growing bulbs in the containers for the bulb in the cropland so that they can grow,*
*f) providing cut flowers by means of the cutting unit.*

By means of this method, after growing the bulbs they are handled through containers keeping said bulbs in conditions for producing flowers which are cut as they grow until the depletion thereof. In other words, the conveyance of the container is what assures the conveyance of the bulb or of the bulb with the flower contained in said container and in a specific position. The preferred configuration of the container is in the form of a tray. If the tray contains a plurality of bulbs, the bulbs are preferably distributed in the tray in rows and columns, rows being identified as those corresponding to the direction transverse to the forward movement of the tray and columns as those corresponding to the forward movement direction of the tray.

The automation of the lines feeding the cutting unit prevents the need to manually feed flowers to said cutting unit and furthermore allows the bulb to support the flower in the single cutting operation, preventing manual operation for feeding a previously cut flower from having to make a second cut for obtaining stigmas. In other words, by means of a single cut without human intervention, the flower is cut once at the height suitable for recovering stigmas with the pre-established quality.

After each cut, the bulbs are returned to the storage area to continue producing flowers until the depletion thereof. At this moment, the bulbs are removed from the containers together with additional bulbs that have grown in order to bring them to the cropland, returning to the first step of the method which again allows bulb growth for subsequent farming.

The method provides flowers cut by means of the cutting unit with the particularity that these flowers are cut such that a subsequent cut is not required for obtaining stigmas. Stigmas are obtained by separating the rest of the parts of the cut flower.

Automated means which allow separating stigmas, the valuable end product, from the rest of the flower without using subsequent cuts will be described in the detailed description of the invention.

A second aspect of the invention relates to a saffron flower cutting device which allows cutting the flowers in containers containing a plurality of bulbs with flowers distributed in rows and columns, preferably in the form of trays.

The saffron flower cutting device comprises:
- *an inlet conveyance line for conveying containers for the bulb, wherein*
   ∘ *the containers for the bulb are configured for supporting a plurality of bulbs with saffron flower and, when the container for the bulb is located operatively on the conveyance line for conveying the containers for the bulb, the plurality of bulbs are aligned in a direction (Y-Y') transverse to the forward movement direction (X-X') of the inlet conveyance line,*
- *a plurality of cutting modules distributed transversely (Y-Y') with respect to the forward movement direction (X-X') of the inlet conveyance line, each cutting module configured for cutting one of the flowers of the tray, wherein each of the cutting modules comprises:*
   ∘ *an image sensor with a processing unit configured for viewing the flower as it moves and identifying the cutting height,*
   ∘ *a panel located opposite the image sensor such that the flower to be cut is arranged between the panel and the image sensor, wherein said panel prevents the image sensor from observing the rest of the flowers arranged in the viewing direction of said image sensor,*
   ∘ *a cutting element movable in height configured for cutting the flower as it moves at a height pre-established by the processing unit of the image sensor,*
   ∘ *suction means for removing the freshly cut flower, wherein at least all the modules except the last one comprise:*
   ∘ *a runner configured for tilting a flower or the stalk freshly cut by the cutting element such that it does not obstruct the view of the rest of the image sensors.*

The containers can be configured with separate housings such that each housing houses a bulb such that the housings are what are distributed in rows and columns, assuring the correct positioning of the bulbs.

The inlet conveyance line assures the correct orientation of the containers fed to the flower cutting device and move in the operative mode in the forward movement direction X-X'. In turn, the correct position of the bulbs establishes the localization of the flowers growing vertically on the bulbs.

The device has a plurality of cutting modules distributed transversely Y-Y' with respect to the forward movement direction X-X' such that during the forward movement of the container, each of the cutting modules receives the flowers from a specific column of the container.

The cutting module comprises a laterally positioned image sensor to allow observing the flower moving pass it before reaching the cutting element. The image sensor has a central processing unit responsible for processing the obtained flower image to identify the cutting height based on the shape and/or color of the flower. Algorithms of this type are known, as described in the aforementioned publication by Luis Gracia et *al*., July 2009. Said algorithm implemented in the central processing unit establishes the cutting height and provides a signal with the cutting height value which is sent to the cutting element so that it is positioned according to said parameter.

The image is observed according to the direction transverse to the flower such that if the module corresponds to the first flower, the flowers arranged behind according to this transverse direction would affect the image observed by the sensor and its central processing unit would not be capable of establishing the height value. The device solves this problem by interposing a panel concealing the flowers located after the flower corresponding to the cutting unit of the sensor. If the flower is not the first one, the same problem as the flowers that are located in front arises or, if the flower has already been cut, the problem arises due to the remaining stalk. The device incorporates a runner tilting the flower or the stalk, where appropriate, to prevent them from obstructing the view of the sensor.

According to one embodiment, the cutting modules are consecutively shifted according to the forward movement direction X-X' such that one and the same row of flowers of the container are cut progressively. In this particular case, the panels conceal the flowers located between the flower to be cut and the end of the row opposite the sensor, and the stalks already cut by the cutting modules which have already been actuated are tilted by the runner. This embodiment has the advantage that the runners tilt the cut stalks but not the flowers which may be damaged in some way by the runner.

An embodiment with a specific configuration and with auxiliary components completing the process up to the production of stigmas separated from the flower is described hereinafter.

### Description of the Drawings

The foregoing and other features and advantages of the invention will be more clearly understood based on the following detailed description of a preferred embodiment provided only by way of illustrative and non-limiting example in reference to the attached drawings.
Figure 1 schematically shows the two productive environments, a cropland and a farming area formed by an industrial unit or a greenhouse.
Figure 2 shows the distribution of means inside the industrial unit or greenhouse which allow growing flowers, harvesting them and separating stigmas as the end product. The flow lines of the containers containing the bulbs are shown in the same figure.
Figure 3A shows the perspective view of the cutting unit and part of the flowers emerging the container with bulbs for indicating the mode in which said container moves forward towards the cutting unit.
Figure 3B shows the same cutting unit as the one shown in Figure 3A applied for cutting flowers contained in a container which, instead of having soil as bulb support, has means adapted for the hydroponic cultivation thereof.
Figures 3C, 3D show the elevational and profile views of the same cutting unit in order to observe the interaction thereof with the flowers to be cut.
Figure 4 shows a perspective view of a container for the bulbs, this container in turn comprises a plurality of trays which directly contain the bulbs with flowers, distributed in rows and columns, with means to make linear movement on a conveyance line easier.
Figures 5A, 5B show the elevational and plan views, respectively, of a plurality of cutting units together with the image sensors as well as a container in order to show the spatial distribution according to one embodiment.
Figures 6A, 6B, 6C show the same elements as Figures 5A and 5B, shown in broken lines, to which the suction means for suctioning cut flowers and a holding structure have been superposed.
Figures 7A, 7B show the elevational and profile views of the suction means for suctioning flowers, separation means for separating stigmas from the rest of the flower and decantation tanks for classification.
Figure 8 shows a partially sectioned detail of the suction means for suctioning flowers.
Figure 9 shows a perspective partially sectioned view of a decantation tank for classification.

### Detailed Description of the Invention

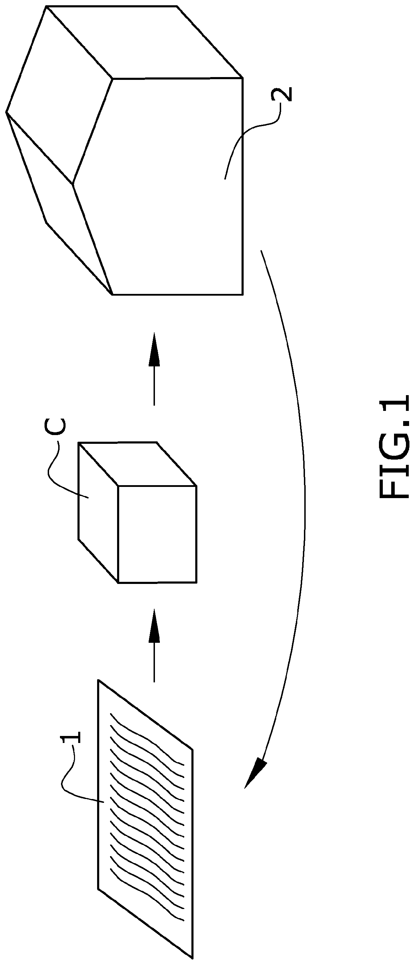

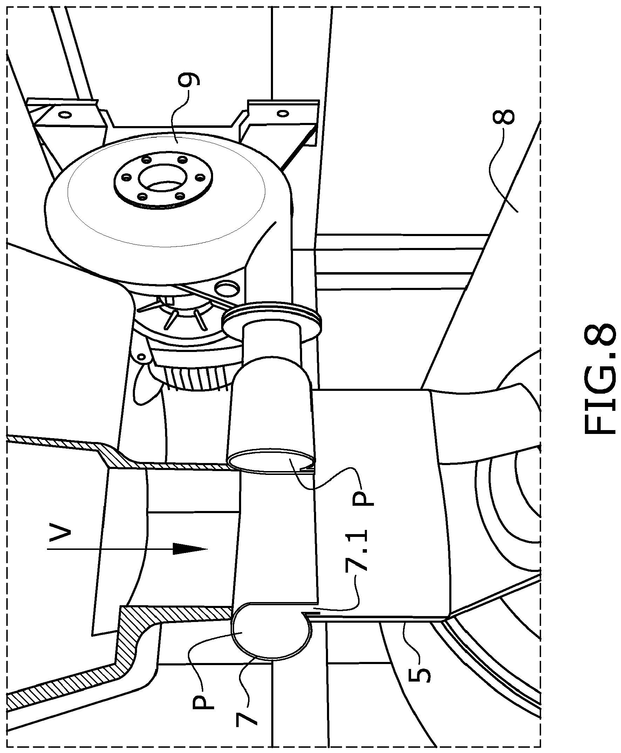

According to the first inventive aspect, the present invention relates to a method of farming bulbs for the production of saffron flower. Figures 1 to 9 show the means used in an embodiment of this first inventive aspect and the reference numbers used for identifying various elements will be those shown in any of the drawings.

Figure 1 schematically shows an embodiment in which a cropland (1) and a farming area (2) are combined. The cropland (1) is a field in which saffron bulbs (4) are planted so that they can grow and mature until reaching the conditions in which they produce flower (F). Once the bulbs (4) have grown in the cropland (1), they are transplanted to containers (3) for automated farming in the farming area (2). This farming area (2) can be uncovered, nevertheless, optimal conditions are achieved in an industrial unit (2) or a greenhouse such as the one shown in Figure 1 in which the environmental conditions, i.e., variables such as humidity, temperature or light, can be under control.

This same drawing shows as an embodiment an ambient-controlled chamber (C) intended for storing bulbs from the cropland (1) such that the step-wise flowering thereof is allowed before moving them to farming area (2). This step-wise flowering can be carried out, for example, by dividing all the bulbs (4) into a set of batches to later on individually change the ambient conditions for one of the batches, particularly the batches of bulbs (4) from which flowers are to be obtained.

In this embodiment, there is established inside the industrial unit (2) a storage area for storing the bulbs (4) in their corresponding containers (3) to favor the growth of flowers (F) which are cut according to their growth rate. Every time the flowers (F) are cut in a cutting unit (2.4), the bulbs (4) which have generated those flowers (F) are returned to the storage area until the next flower (F) appears.

After the period for producing flowers (F) ends, the bulbs (4) are depleted and have given rise to the growth of other small new bulbs. These new bulbs are separated and used for planting in the cropland (1) so that they can grow, starting the described process again.

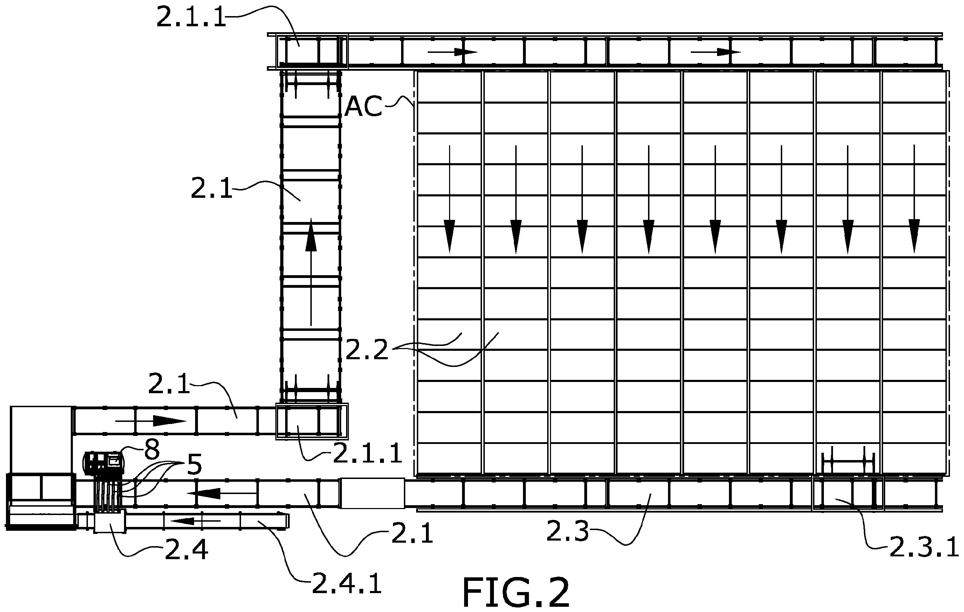

Figure 2 is a schematic plan view of the inside of the industrial unit (2), the farming area, used in this example for the step producing and cutting saffron flowers (F). According to the orientation selected in the drawing, a storage and growth area (AC) is shown on the right side identified with broken lines with dashes and dots. This storage and growth area (AC) is formed by a plurality of conveyance and storage line segments (2.2) which, in this embodiment, have the same length and are arranged parallel to one another, starting in the upper part of the drawing and ending at the opposite end in the lower part of the drawing. The arrows indicate the forward movement direction of the containers (3) for the bulb (4) responsible for allowing the conveyance of the bulbs (4).

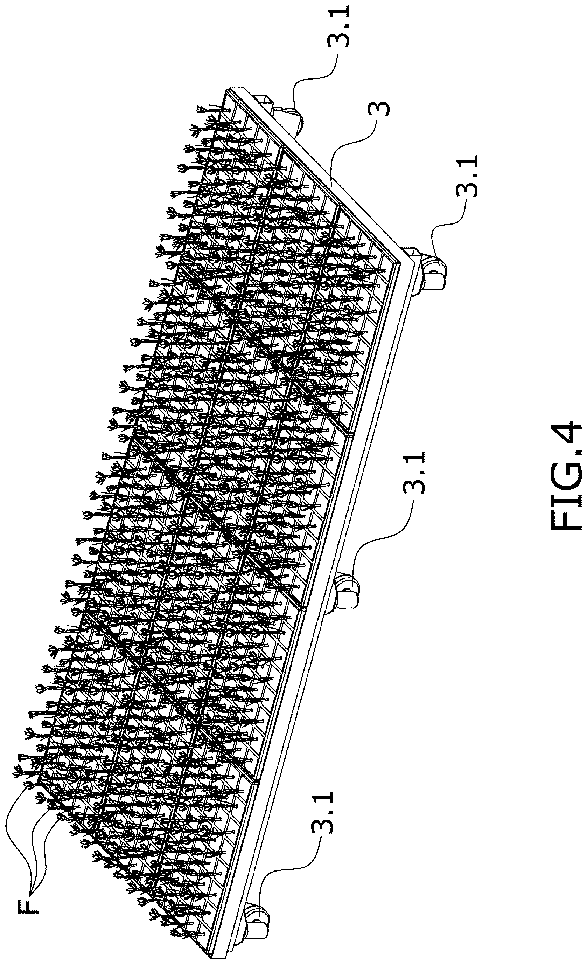

Figure 4 shows an embodiment of the container (3) to allow a high production. The container (3) can be configured for directly holding the bulbs (4), nevertheless, in this embodiment of the container (3), it is a support element containing a plurality of trays, in this case twelve trays distributed in a 3x4 array. An operator can thus exchange trays with a smaller number of bulbs (4) than the total number of bulbs (4) located in the container (3) for an easier handling. This container (4) has wheels (3.1) making conveyance through a conveyance line easier.

According to one embodiment, the conveyance lines have two parallel guides on which the wheels (3.1) roll with groove of the containers (3), a guided conveyance according to the trajectory imposed by the guides being established.

Returning to Figure 2, the containers (3) are stored in the storage and growth area (AC) while the bulbs (4) produce flowers (F). The containers (3) with bulbs (4) are fed through one end, the one shown on top, and are extracted through the other end, the one shown below. The movement caused by the insertion or extraction of containers requires the movement capacity provided by each conveyance and storage line segment (2.2). The rest of the time when there is no movement is when the bulbs (4) are stored to favor flower (F) growth.

When there is a container (3) with one or more flowers (F) which can be cut in a conveyance and storage line segment (2.2), said container (3) is extracted transferring it from said conveyance and storage line segment (2.2) to an extraction conveyance line (2.3) adapted for receiving containers (3) from any of the conveyance and storage line segments (2.2).

The arrow indicates the direction of movement thereof to the left to reach a cutting unit (2.4). The cutting unit (2.4) receives in an automated manner the containers (3) or, in this embodiment, only the trays directly containing the bulbs (4) with the flowers (F) in order to cut the flowers (F) and suction it, bringing them through suction conduits (5) to a tank (8).

Two conveyance lines or part of said lines are shown in parallel at the inlet of the cutting unit (2.4), one line is the inlet conveyance line (2.4.1) for conveying the cutting unit (2.4) and the other line is the final segment of the extraction conveyance line (2.3). In this embodiment, the parallel arrangement of these two line segments allows manually transferring trays from the containers (3) from the extraction conveyance line (2.3) directly to the inlet conveyance line (2.4.1) to feed the cutting unit (2.4). Nevertheless, the extraction conveyance line (2.3) may directly feed the cutting unit (2.4) with containers (3) without operator intervention, wherein in this case a line segment would be interpreted as the inlet conveyance line (2.4.1). In other words, in this embodiment the cutting unit (2.4) has at its inlet an inlet conveyance line (2.4.1) which allows constructing the machine as an independent unit.

The manual intervention allows an operator to perform visual classification, look for damage on the flowers (F) or other additional control operations.

Although the trays are part of the container (3), the tray itself can likewise be interpreted as a container (3). In this embodiment, the support assembly with wheels (3.1) plus as a container element has been identified as the container (3) for describing a more complex embodiment, although the invention can only operate with containers formed by individual trays (3) directly containing the bulbs (4). In this case, the conveyance lines must incorporate means to make forward linear movement of the trays (3) easier.

In this embodiment, the extraction conveyance line (2.3) for extracting the containers (3) for the bulb (4) obtains containers (3) by means of a transfer mechanism (2.3.1) responsible for extracting the container (3) from a conveyance and storage line segment (2.2) and placing it in the extraction conveyance line (2.3).

Once the flowers (F) have been cut in the cutting unit (2.4), the container (3) moves to the beginning of the feed conveyance line (2.1) for feeding the containers (3) for the bulb (4) to a preselected conveyance and storage line segment (2.2). This pre-selection is preferably the segment the container (3) originally comes such that each container (3) always handles the same assembly of containers (3).

Other embodiments maintain one or more gaps in each conveyance and storage line segment (2.2) and select the segment depending on parameters such as the number of moved containers (3), movement optimization, etc.

This feed conveyance line (2.1) for feeding the containers (3) for the bulb (4) has in this embodiment two transfer mechanisms (2.1.1) which allow the change in direction necessary to bring the containers (3) from the cutting unit (2.4) to the beginning of the conveyance and storage line segments (2.2).

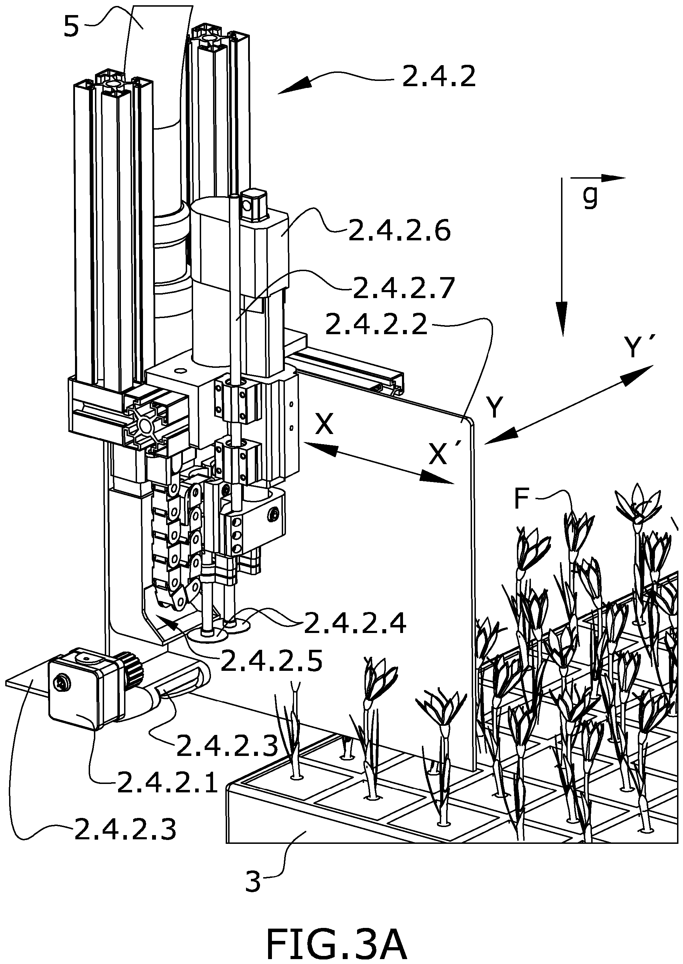

Figure 3A shows an embodiment of a cutting unit (2.4) arranged facing a container (3) storing bulbs (4) distributed in rows and columns. Rows are identified with the alignments of bulbs (4) oriented in the transverse direction (Y-Y') and columns are identified with alignments of bulbs (4) oriented in the forward movement direction (X-X') through the cutting unit (2.4).

A cutting unit (2.4) is formed by a plurality of cutting modules (2.4.2) wherein, in this manner the cutting module (2.4.2) shown in Figure 3A is responsible for cutting the flowers (F) from a column. This cutting module (2.4.2) shows a guide (2.4.2.7) that can travel vertically and allows placing the cutting elements (2.4.2.4) at different heights, made up in this embodiment of two circular blades, partially overlapping one another, rotating with direction of rotation towards the overlapped area.

The first flower (F) of the column is moved closer to the cutting blade and is characterized by a specific height reached in the growth phase. Figure 3A shows a panel (2.4.2.2) attached to the cutting module (2.4.2) and positioned in the transverse direction (Y-Y') such that the panel (2.4.2.2) is located between the column to be cut and the next column, concealing all the flowers (F) located after the next inclusive column from view.

An image sensor (2.4.2.1) is positioned to focus on the flower (F) to be cut, having the panel (2.4.2.2) as background. The sensor (2.4.2.1) is equipped with a processing unit configured for viewing the flower (F) as it moves and identifying the cutting height. Once the cutting height is established, the central processing unit sends a signal with this information used for acting on an actuator (2.4.2.6) to raise or lower the cutting elements (2.4.2.4) such that they are placed at the height of the flower (F) determined by the processing unit of the image sensor (2.4.2.1).

This actuation of changing vertical position, vertical being understood as the direction established by the action of gravity *̅g̅*̅, is carried out before the flower reaches the cutting elements (2.4.2.4).

Once the cutting has been carried out, the bulb (4) which may be capable of producing more flowers (F) with the cut stalk remains in the container (3). This cut stalk can be high enough so as to interfere with the image taken of the flowers (F) in the following columns by other cutting modules (2.4.2). For this purpose, the cutting module (2.4.2) is provided with a runner (2.4.2.3) which receives the freshly cut stalk and tilts it or pushes it down to leave it at a height less than the field of vision of any image sensor (2.4.2.1), or at least a height that does not interfere with the measurements of the heights of other flowers (F) located behind. The rear part of this runner (2.4.2.3) is prolongated by means of a plate with a length established by the movement of the container (3) during which the freshly cut stalk is kept tilted.

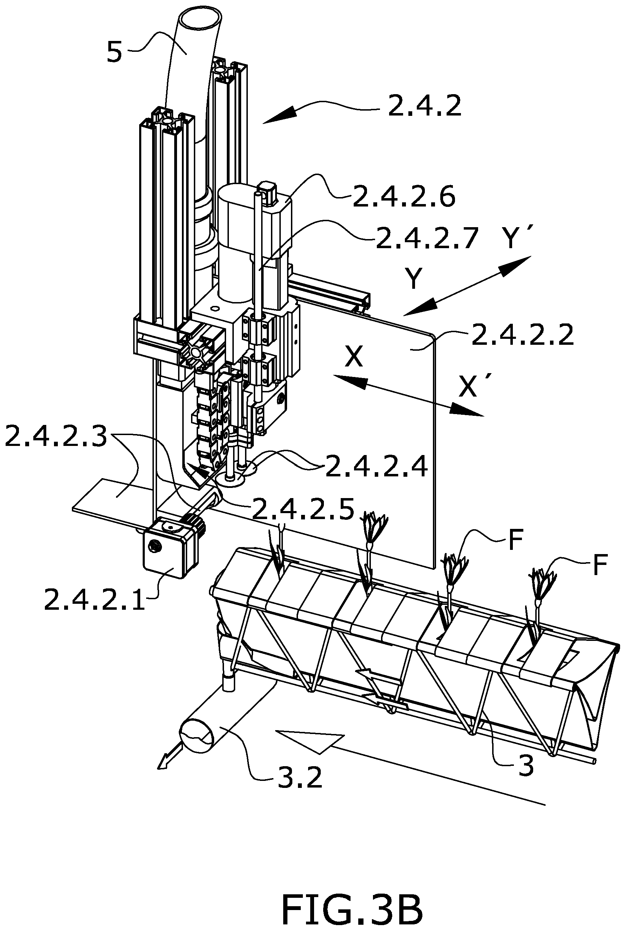

Figure 3B shows the same cutting module (2.4.2) used with containers (3) having the means for the vital support of the bulbs (4) by means of hydroponic cultivation. This case only depicts one column of the container (3) which can have a plurality of parallel columns so that the bulbs (3) configure a matrix distribution in rows and columns.

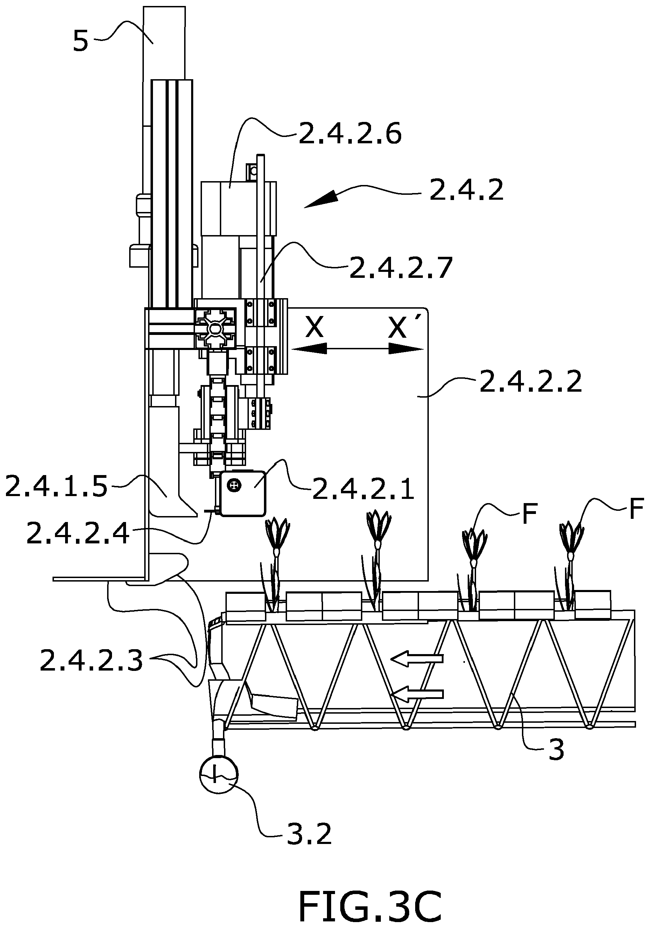

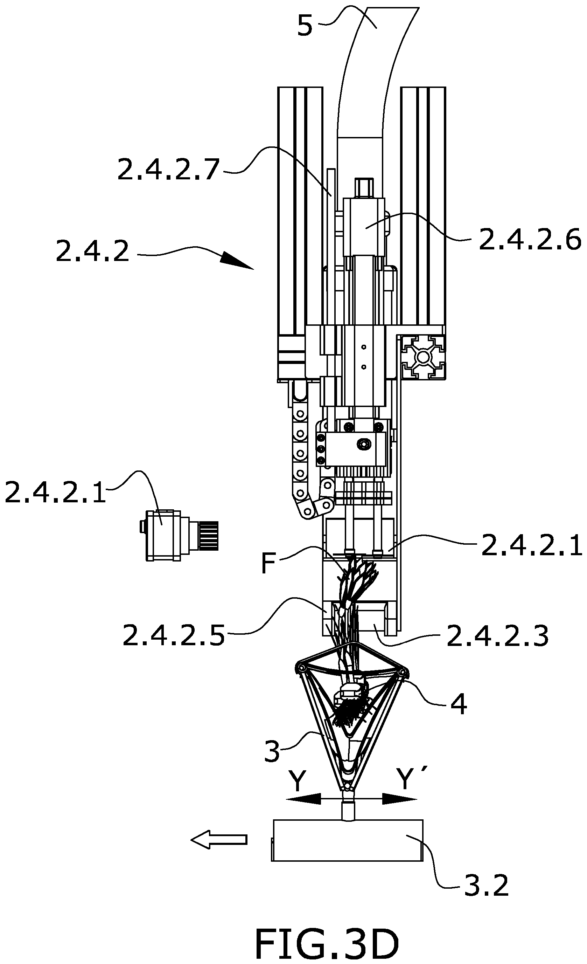

Figures 3C and 3D are the elevational and profiles views, respectively, of one and the same cutting module (2.4.2) wherein the container (3) adapted for hydroponic cultivation of the bulbs (4) shows a draining conduit (3.2) which may be common to all the columns of bulbs (4). The view of Figure 3D also shows the channeled section with the channel extending along the entire column and keeping the roots of the bulbs (4) fed until reaching the draining conduit (3.2).

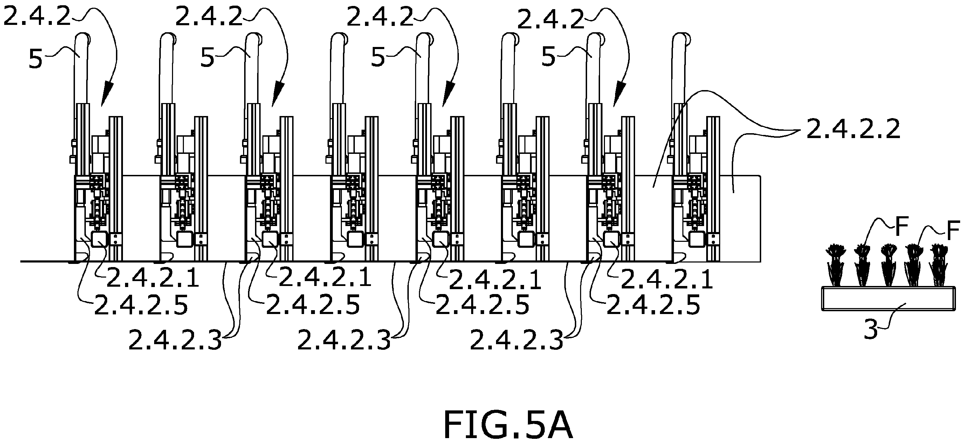

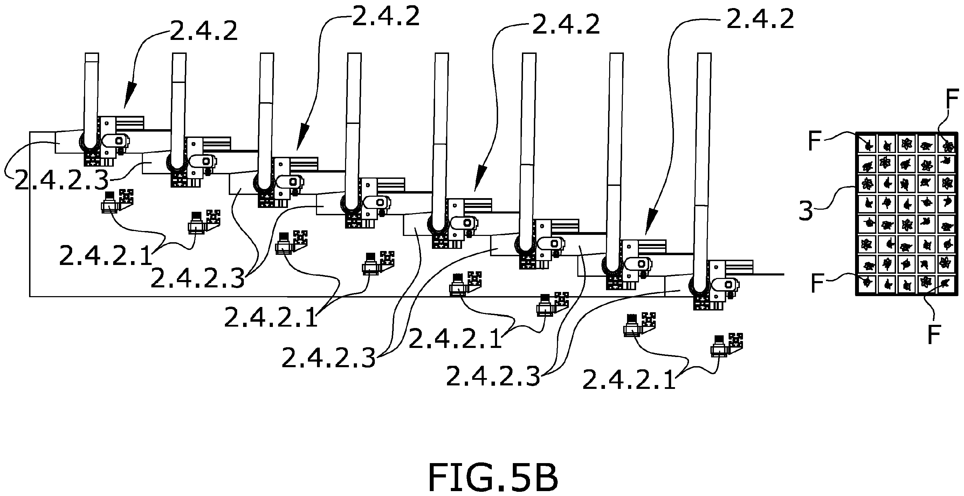

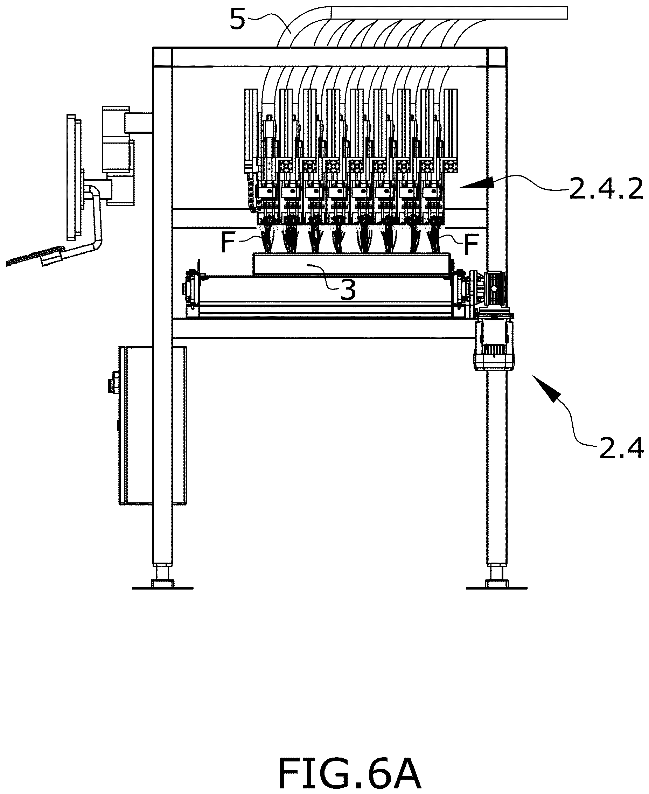

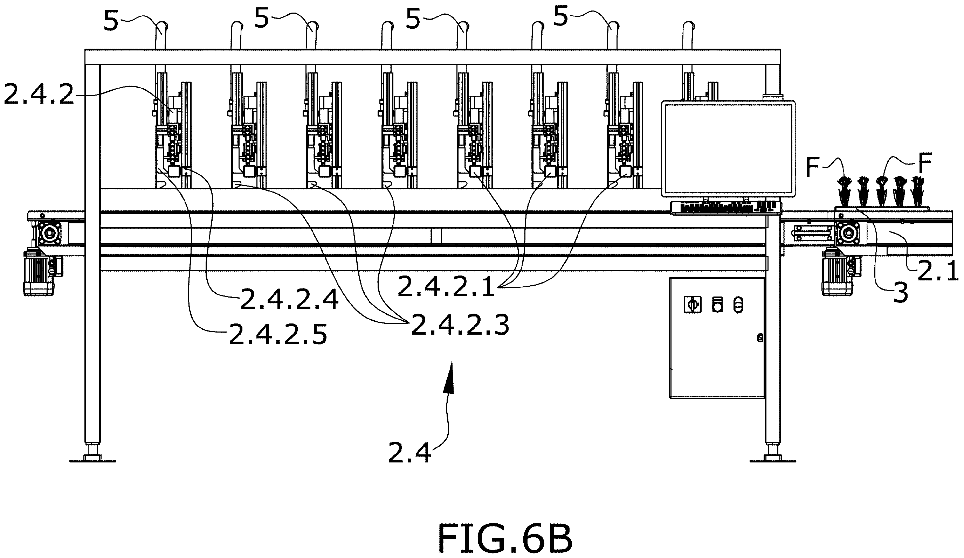

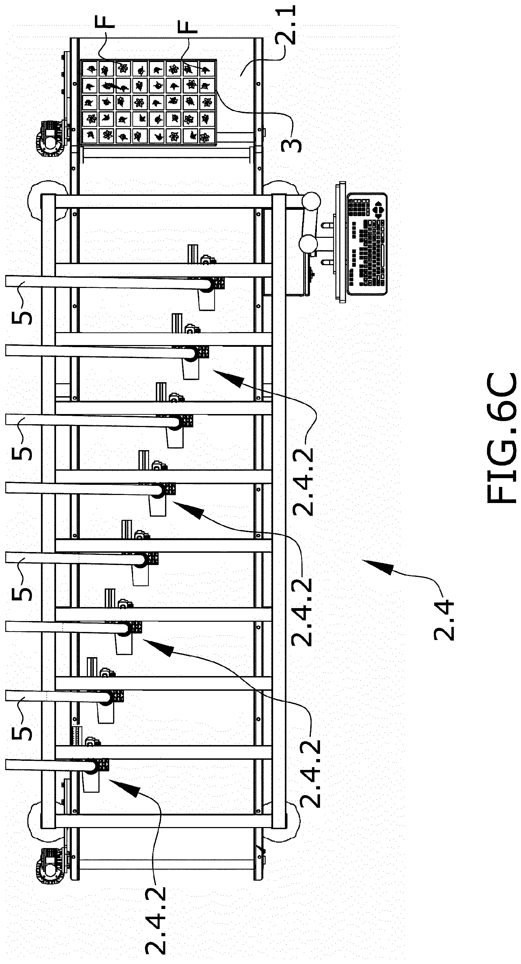

Figures 5A, 5B, 6A, 6B and 6C show a machine with eight cutting modules (2.4.2) adapted for cutting trays with eight columns of bulbs (4) with flowers (F). Each of the cutting modules (2.4.2) is shifted a specific distance according to the forward movement direction of the tray. The term "tray" is used because in this embodiment the container (3) contains trays which in turn store bulbs (3) distributed in rows and columns. Although the cutting machine may allow the container (3), in this embodiment trays inspected by the operator are introduced, wherein these trays must in turn be interpreted as a simpler container (3).

According to the shift used in this embodiment, in one and the same row of flowers (F), the flower (F) located in the first column and depicted in the lower part of Figure 3B is the one being cut first. The next flower (F) being cut is the second one and so on and so forth up to the last flower (F) depicted in the top most part according to the orientation of this same Figure 3B.

As the tray (3) moves closer to the first cutting module (2.4.2), the panel (2.4.2.2) of this first cutting module (2.4.2) is placed above the tray between the first column and the second column such that the first image sensor (2.4.2.1) has visual access to the first flower (F) but not the second and subsequent flowers due to the interposition of the panel (2.4.2.2).

The cut stalk of this first flower (F) is titled and pushed down by the runner (2.4.2.3) of the first cutting module (2.4.2). In the forward movement of the tray (3), the second flower (F) and the next flowers from the same row move forward, moving closer to the second cutting module (2.4.2). The image sensor (2.4.2.1) of the second cutting module (2.4.2) has visual access to the second flower (F) given that the stalk of the first flower (F) is pushed down by the runner (2.4.2.3) of the first cutting module (2.4.2) and because the panel (2.4.2.2) of the second cutting module (2.4.2) is interposed between the second column and third column, concealing the third flower (F) and the next flowers in the row.

The image sensor (2.4.2.1) therefore captures the second flower (F) and determines the cutting height. The cutting elements (2.4.2.4) of the second cutting unit (2.4) are placed at this height pre-established by the processing unit of the image sensor (2.4.2.1) and the flower (F) is cut.

Every time the cutting elements (2.4.2.4) cut the flower (F) which is supported by its stalk up until the moment of cutting, the flower is absorbed by suction means (2.4.2.5) having suction mouth right after the cutting elements (2.4.2.4).

These cutting elements (2.4.2.4) are raised or lowered by means of a raising actuator (2.4.2.6) imposing a movement of the cutting elements (2.4.2.4) according to a vertical direction imposed by guides (2.4.2.7) for these cutting elements (2.4.2.4).

The mouth of the suction means (2.4.2.5) moves integrally with the cutting elements (2.4.2.4) such that said mouth is always located coinciding with the position of the flower (F) at the moment of cutting.

The forward movement process of the tray (3) is the same for each column until the first row is completely cut. Nevertheless, the cutting modules (2.4.2) continue their work of cutting all the flowers (F) from their column even before the next cutting unit (2.4) with the next column starts to be actuated. The existence of the runners (2.4.2.3) and panels (2.4.2.2) nevertheless allows the image taken by each image sensor (2.4.2.1) to be an image of the flower (F) to be cut alone and neither the stalks existing in front nor the flowers (F) existing behind appear.

Only the last cutting module (2.4.2) does not require a panel (2.4.2.2) although it is suitable because the image maintains a neutral background and does not depend on objects found behind this cutting module (2.4.2), "behind" being understood as the position according to the direction of observation of the image sensor (2.4.2.1); in other words, according to transverse direction Y-Y'.

Each of the cutting modules (2.4.2) comprises a suction conduit (5) conveying the freshly cut flower (4) including the stigmas.

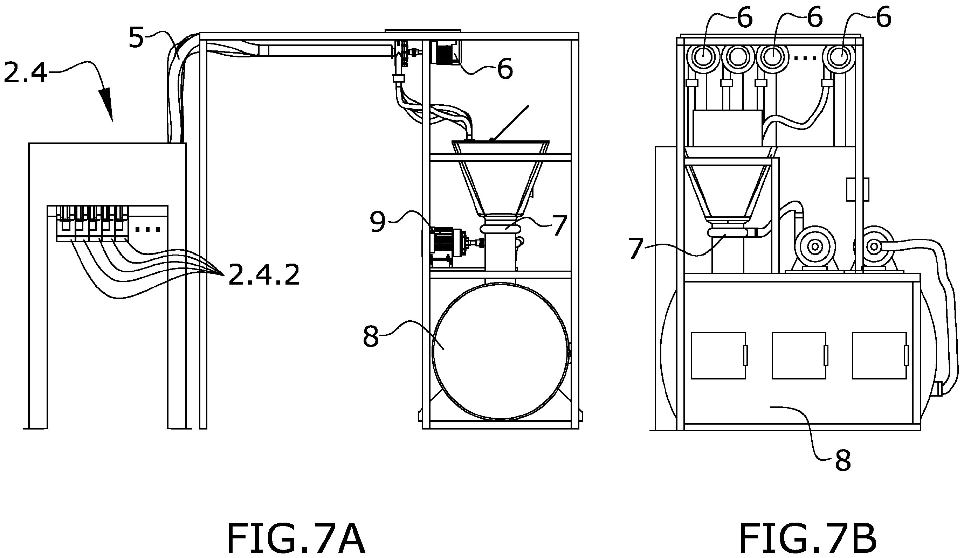

As shown in Figure 7A, suction is achieved with one or more suction pumps (6) suctioning the plurality of suction conduits (5) conveying the cut flowers (F). The suction conduits (5) converge into a single conduit in which there is arranged a blowing pump (9) injecting air into a distributor ring (7) configured in a toroidal shape, surrounding the single conduit, and with an outlet in the form of an opening or tangent groove (7.1) according to a section of the toroid, towards the inside of the single tube which is oriented according to the forward movement direction of the air conveying the flowers (F).

The flowers (F) reach a tank (8) inside which there are walls (8.1) forcing a zig-zag flow. The tank (8) is extended horizontally and the baffle walls (8.1) are interposed in the flow, said walls being arranged vertically and up and down in an alternating manner, to force this zig-zag flow.

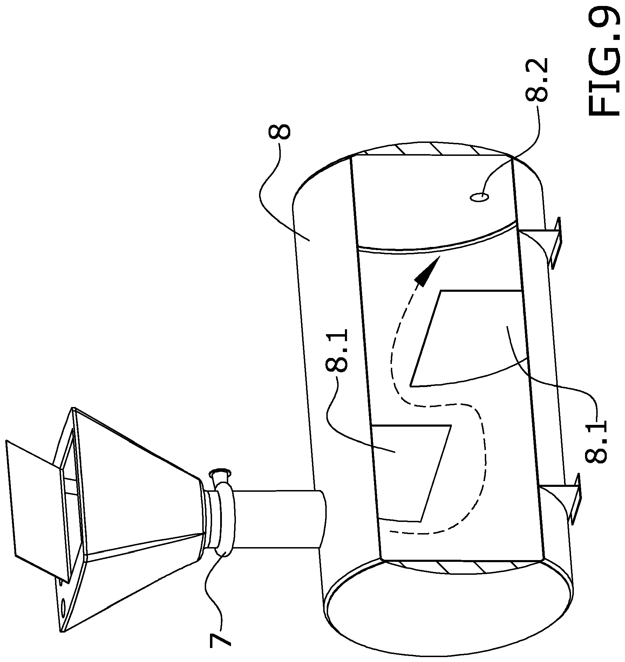

The sinuous travel of the cut flowers (F) at a height such that the stigmas are detached from the flower (F) requires the petals and stigmas to be loose and flow in the same airflow. As shown in Figure 9, upon entering the tank (8), the horizontal and zig-zag movement causes heavier parts to fall to the bottom and become incapable of overcoming the baffle walls (8.1) located downstream. The lighter parts are indeed capable of overcoming the baffle walls (8.1) until they move in a slower flow causing the decantation thereof. This configuration leads to a selective classification of the parts of the flower, and particularly, stigmas giving rise to the spice or end product to be marketed are separated in one of the cavities of the tank (8). An outlet (8.2) for the exit of the air after the solid parts settle inside the tank (8) is shown on the right side of the tank (8).

This results in an automated production of stigmas throughout the entire growth, cutting and separation phase, reducing production cost.

The described method and system can be optimized with control units that count the production per each tray of the containers (3), or even each bulb (4) if the information supplied by each of the image sensors (2.4.2.1) is used because they can even identify bulbs (4) that have given rise to no flowers (F) or very few flowers (F).

With this information, it is possible to obtain statistics for each bulb (4) which are then used for better selecting flower-generating bulbs (4) for subsequent productions.

There are also other counting methods which may be redundant with respect to those described, based on the incorporation of codes (for example, barcodes or through RFID cards) identifying each tray. In this case, the central processing unit does not have to memorize the movements of the trays (3), rather the incorporation a code reader at the inlet of the cutting unit (2.4) which is what identifies the tray and the bulbs (4) it contains is sufficient.

## Claims

1. A method of farming bulbs for the production of saffron flower, comprising the following means:
- a cropland (1) for cultivating and growing saffron bulbs,
- a farming area (2) in turn comprising:
i. a plurality of containers (3) for the bulb (4),
ii. a plurality of conveyance and storage line segments (2.2) for conveying and storing containers (3) for the bulb (4),
iii. at least one feed conveyance line (2.1) for feeding the containers (3) for the bulb (4) with selection means configured for introducing the container (3) for the bulb (4) conveyed in a pre-established conveyance and storage line segment (2.2),
iv. at least one extraction conveyance line (2.3) for extracting the containers (3) for the bulb (4) with selection means configured for extracting a container (3) for the bulb (4) from a pre-established conveyance and storage line segment (2.2),
v. a cutting unit (2.4) with an inlet fed by the extraction conveyance line (2.3) and with an outlet connected with the feed conveyance line (2.1),
wherein the method comprises the following steps:
a) cultivating a plurality of bulbs (4) in the cropland (1) so that they can grow,
b) harvesting the cultivated bulbs (4),
c) planting the bulbs in the containers (3) for the bulb (4), at least one bulb (4) per container (3), and storing the containers (3) for the bulb (4) with their at least one bulb (4) in the conveyance and storage line segments (2.2),
d) carrying out the following sub-steps repeatedly until at least a part of the bulbs (4) has been depleted:
- extracting a container (3) for the bulb (4) with at least one bulb (4) with growing saffron flower (F) from its conveyance and storage line segment (2.2), moving it to the extraction conveyance line (2.3) which in turn conducts it to the cutting unit (2.4),
- cutting and removing the at least one saffron flower (F) by means of the cutting unit (2.4),
- returning the container (3) for the bulb (4) by moving it from the feed conveyance line (2.1) to a conveyance and storage line segment (2.2),
e) extracting the bulbs (4) depleted from the containers (3) for the bulb (4) and planting the new growing bulbs (4) in the containers (3) for the bulb (4) in the cropland (1) so that they can grow,
f) providing cut flowers (F) by means of the cutting unit (2.4).

2. The method according to claim 1, comprising one or more chambers (C) for forcing the bulbs (4) and wherein after step b) of harvesting the bulbs (4), they are brought to the chamber or chambers (C) for forcing by allowing the step-wise flowering thereof.

3. The method according to any of the preceding claims, wherein in step d), after the operation of cutting at least one saffron flower (F) by means of the cutting unit (2.4), the container (3) is returned to the same conveyance and storage line segment (2.2) from which it has been extracted.

4. The method according to any of the preceding claims, wherein in step d), one or more extractions of containers (3) for the bulb (4) from the conveyance and storage line (2.2) is additionally carried out, even if the bulb does not have any flower (F), moving it through the extraction conveyance line (2.3), through the cutting unit (2.4) and through the feed conveyance line (2.1) to allow accessing containers (3) for the bulb (4) that have a flower (F) and are stored in the conveyance and storage line (2.2).

5. The method according to any of the preceding claims, wherein at least one container (3) comprises a plurality of vessels or trays for containing bulbs (4), wherein the plurality of vessels or trays are distributed in rows and columns.

6. The method according to claim 4, wherein the cutting unit (2.4) is configured for cutting (2.4) saffron flowers (F) of the plurality of flowers (F) growing from the plurality of bulbs (4) stored in the vessels or trays.

7. The method according to any of the preceding claims, wherein the farming area (2) is inside a climate-controlled industrial unit with control of at least one environmental variable therein.

8. The method according to any of the preceding claims, wherein water is supplied to the bulbs (4) during steps c) and d) by means of moisture and without liquid water supply.

9. The method according to any of the preceding claims wherein,
- it comprises drive means for driving the containers (3) for the bulb (4),
- it comprises a central processing unit,
wherein the central processing unit is adapted for controlling the drive means and carrying out the movements according to step d).

10. The method according to claim 9, wherein the central processing unit counts of cuts applied to each bulb.

11. The method according to claim 10, wherein step e) is carried out after selecting the bulbs (4) counted as having a larger number of cuts.

12. A saffron flower cutting device, comprising:
- an inlet conveyance line (2.4.1) for conveying containers (3) for the bulb (4), wherein
∘ the containers (3) for the bulb (4) are configured for supporting a plurality of bulbs (4) with saffron flower (F) and, when the container (3) for the bulb (4) is located operatively on the conveyance line for conveying the containers (3) for the bulb (4), the plurality of bulbs (4) are aligned in a direction (Y-Y') transverse to the forward movement direction (X-X') of the inlet conveyance line (2.4.1),
- a plurality of cutting modules (2.4.2) distributed transversely (Y-Y') with respect to the forward movement direction (X-X') of the inlet conveyance line (2.4.1), each cutting module (2.4.2) configured for cutting one of the flowers (F) of the tray (3), wherein each of the cutting modules (2.4.2) comprises:
∘ an image sensor (2.4.2.1) with a processing unit configured for viewing the flower (F) as it moves and identifying the cutting height,
∘ a panel (2.4.2.2) located opposite the image sensor (2.4.2.1) such that the flower to be cut is arranged between the panel (2.4.2.2) and the image sensor (2.4.2.1), wherein said panel (2.4.2.2) prevents the image sensor (2.4.2.1) from observing the rest of the flowers (F) arranged in the viewing direction of said image sensor (2.4.2.1),
∘ a cutting element (2.4.2.4) movable in height configured for cutting the flower (F) as it moves at a height pre-established by the processing unit of the image sensor,
∘ suction means (2.4.2.5) for removing the freshly cut flower,
wherein at least all the modules except the last one comprise:
∘ a runner (2.4.2.3) configured for tilting a flower (F) or the stalk freshly cut by the cutting element (2.4.2.4) such that it does not obstruct the view of the rest of the image sensors (2.4.2.1).

13. The device according to claim 12, wherein the plurality of cutting modules (2.4.2) are consecutively shifted according to the forward movement direction (X-X') of the conveyance line for conveying the containers (3) for consecutively cutting the alignment of flowers (F) of the container (3) for the bulb (4) such that the cutting module (2.4.2) located at the end coinciding with the end according to the transverse direction (Y-Y') where the image sensor (2.4.2.1) is located is the first to cut.

14. The device according to claim 12 or 13, wherein the container (3) for the bulb (4) comprises a plurality of vessels or trays for containing bulbs (4), wherein the plurality of vessels or trays is distributed in rows and columns, rows being identified as those oriented in the transverse direction (Y-Y') and columns as those oriented according to the forward movement direction (X-X').

15. The device according to any of claims 12 to 13, wherein the absorption means (2.4.2.5) has an suction mouth moving integrally with the cutting element (2.4.2.4) movable in height for adapting the height thereof to the height of the cut flower (F).

16. The device according to any of claims 12 to 15, wherein the absorption means additionally comprise a blowing pump (6) for introducing pressurized air (P) in the suction conduit (5) through a distributor ring (7) introducing the pressurized air (P) through a peripheral annular opening (7.1) into the suction conduit (5) in the forward movement direction of the suctioned air (v).

17. The device according to any of claims 12 to 16, wherein the suction conduit (5) has interposed therein one or more tanks (8) with inner baffle walls (8.1) for defining a zig-zag air passage, wherein said tank (8) is configured so that in an operative mode the zig-zag trajectory is oriented according to the direction transverse to the vertical direction established by the direction of gravity (*̅g̅*̅) to cause selective decanting of the suctioned elements.

18. A saffron flower farming system at least comprising means i)-iv) of claim 1.

19. The saffron flower farming system according to claim 18, wherein the cutting unit (2.4) of step iv) is a cutting unit according to any of claims 12 to 17.
